# FASCICULE DE BREVET EUROPEEN

(11) **EP 2 679 123 B1**
(45) Date de publication et mention de la délivrance du brevet: **14.01.2015**
(21) Numéro de dépôt: 13173891.6
(22) Date de dépôt: 26.06.2013
(51) Int. Cl.: A47J 43/07

(54) **Appareil électroménager avec passage de câble**
Elektrohaushaltsgerät mit Kabeldurchführung
Household appliance with passing of cables

(30) Priorité: 29.06.2012 FR 1256288
(43) Date de publication de la demande: 01.01.2014
(73) Titulaire: SEB S.A., 69130 Ecully (FR)
(72) Inventeur: Lafond, Jean-Marie, 65420 IBOS (FR); Adam, Sébastien, 65100 LOURDES (FR); Peyras, Lionel, 65100 LOURDES (FR)
(74) Mandataire: Cémeli, Eric Philippe Laurent

(56) Documents cités:
- EP-A1- 1 604 598
- WO-A2-2009/066039
- DE-A1- 19 542 454
- DE-U1- 20 116 107

## Description

La présente invention concerne de manière générale un appareil électroménager muni d'un cordon électrique, et en particulier le passage de ce cordon électrique dans le boîtier de l'appareil.

Il est connu dans l'art antérieur des appareils électroménagers munis d'un cordon électrique, tel que celui décrit dans le document WO2009066039. L'appareil comprend un boîtier en deux parties et le cordon électrique sort du boîtier par un orifice agencé entre les deux parties du boîtier. En d'autres termes, le cordon électrique est pris en sandwich entre les deux parties du boîtier qui sont chacune échancrées à cet effet. En contrepartie, ce système présente notamment l'inconvénient d'imposer un plan de joint entre deux pièces du boîtier pour agencer l'orifice de sortie du cordon électrique. Cela engendre des contraintes sur la géométrie du boîtier et de ses pièces, ce qui limite les libertés dans la conception des formes, ou augmente le prix et la complexité de ces pièces.

En alternative, il est possible d'agencer l'orifice de sortie au milieu d'une pièce du boîtier, mais le montage est considérablement complexifié. En effet, comme le cordon électrique présente à son extrémité libre un connecteur agencé pour relier le moteur à un réseau de distribution de courant électrique, ce connecteur ne peut pas passer par l'orifice de sortie. Avant de connecter le cordon électrique au moteur électrique, il faut alors en usine de montage le faire passer par l'orifice de sortie, et le connecter au moteur électrique. Il en résulte que la pièce comportant l'orifice de sortie se retrouve attachée au reste de l'appareil en cours de montage par le cordon électrique qui passe au travers, et il faut prévoir un posage à proximité de l'appareil en cours d'assemblage pour cette pièce encore non montée. L'assemblage est donc malaisé à cause de cette pièce attachée par un fil à l'appareil en cours de montage.

Un but de la présente invention est de répondre aux inconvénients des appareils de l'art antérieur mentionnés ci-dessus et en particulier, tout d'abord, de proposer un appareil électroménager comportant un cordon électrique sortant du boîtier par un orifice de sortie dont l'agencement n'apporte pas de contraintes aux interfaces de liaison entre les pièces du boîtier, et dont l'assemblage en usine est simple.

Pour cela un premier aspect de l'invention concerne un appareil électroménager de préparation culinaire avec une base motorisée comprenant
- au moins un moteur électrique,
- un cordon électrique assurant une connexion électrique entre le moteur électrique et un connecteur agencé pour relier le moteur électrique à un réseau de distribution de courant électrique,
- un élément de boîtier formant en partie une enceinte extérieure de la base motorisée et comprenant un orifice de sortie par lequel le cordon électrique sort de la base motorisée,
**caractérisé en ce que** l'élément de boîtier comprend une fente reliant l'orifice de sortie à un bord de l'élément de boîtier de sorte à permettre une insertion du cordon électrique dans l'orifice de sortie en passant le cordon électrique dans la fente de l'élément de boîtier lors du montage de l'appareil.

L'orifice de sortie du cordon électrique de l'appareil selon la présente invention n'impose pas de contrainte sur la géométrie d'interface des pièces du boîtier car l'orifice de sortie du cordon électrique n'est pas nécessairement agencé au niveau des bords, d'une jonction, ou d'un plan de joint entre les pièces du boîtier. De plus, l'élément de boîtier sur lequel l'orifice de sortie est implanté comporte une fente qui relie l'orifice de sortie à un bord de l'élément de boîtier qui permet d'insérer le cordon électrique dans l'orifice de sortie en le passant par la fente. Lors du montage, on peut donc d'abord connecter le cordon électrique au moteur de l'appareil, et lors de l'étape ultérieure qui est le montage de l'élément de boîtier comportant l'orifice de sortie, on peut toujours faire passer le cordon électrique par la fente pour l'insérer dans l'orifice de sortie de l'élément de boîtier. En d'autres termes, on insère le cordon électrique dans l'orifice de sortie seulement quand il faut monter l'élément de boîtier sur l'appareil, même si le cordon électrique est déjà connecté à l'appareil. Un dernier avantage est d'offrir la possibilité aux concepteurs de faire sortir le cordon électrique du boîtier n'importe où sur l'une des pièces de ce boîtier, en fonction des diverses contraintes produit (longueur de cordon minimale, sortie vers l'arrière), sans compliquer le montage de l'appareil en usine.

De manière avantageuse, la base motorisée comprend au moins une pièce de structure agencée pour boucher la fente sur au moins une partie de sa longueur lorsque l'élément de boîtier est monté sur la base motorisée. Cette mise en oeuvre améliore la qualité perçue en obstruant la fente une fois l'élément de boîtier monté, pour cacher l'intérieur de l'appareil.

Avantageusement, ladite au moins une pièce de structure comprend une nervure agencée pour s'insérer dans la fente de l'élément de boîtier. Cette mise en oeuvre est économique et permet d'avoir une surface extérieure du boîtier sensiblement continue.

Une réalisation particulièrement intéressante consiste en ce que la fente comporte sur au moins une partie de sa longueur des moyens de guidage de la nervure. Les moyens de guidage apportent une aide au montage pour éviter les mises en place répétées avant de trouver la bonne position relative des pièces. Les moyens de guidage permettent de pré-positionner les pièces entre elles lors du montage, ce qui autorise un montage en aveugle.

De manière avantageuse, ladite au moins une pièce de structure est une gaine de ventilation agencée autour du moteur électrique. Les coûts et le nombre de pièces sont limités en cumulant les fonctions sur la gaine de ventilation.

Avantageusement, l'enceinte extérieure de la base motorisée comprend une façade agencée à l'avant de la base motorisée, l'élément de boîtier est agencé à l'arrière de la base motorisée, et ladite au moins une pièce de structure est prise en sandwich entre la façade et l'élément de boîtier. Le montage de l'appareil selon la présente invention est aisé, et le cordon électrique peut sortir par l'élément de boîtier agencé à l'arrière, sans augmenter le nombre de pièces.

L'invention concerne également un appareil électroménager de préparation culinaire, caractérisé :
- **en ce que** ladite au moins une pièce de structure comprend au moins un point de positionnement sur la façade ;
- en ce qu'il comprend un patin élastique agencé entre la façade et ladite au moins une pièce de structure audit point de positionnement ;
- en ce que la fente est agencée derrière la façade ;
- en ce que la fente est agencée sous l'appareil ;
- en ce que l'orifice de sortie est en forme de Y ;
- en ce que l'orifice de sortie est agencé derrière l'appareil ;
- en ce qu'il comprend des pieds agencés pour définir un plan inférieur d'appui sur un plan de travail ;
- en ce que la base motorisée comprend un axe d'entraînement agencé pour entraîner au moins un outil de travail, et en ce que l'axe d'entraînement est relié au moteur par un réducteur ;
- en ce que l'axe d'entraînement est agencé latéralement sur la base motorisée.

Un second aspect de l'invention est un procédé de montage d'un appareil électroménager de préparation culinaire avec une base motorisée, comprenant les étapes consistant à :
- monter au moins un moteur électrique dans la base motorisée,
- connecter le moteur électrique avec un cordon électrique assurant une connexion électrique entre le moteur électrique et un connecteur agencé pour relier le moteur électrique à un réseau de distribution de courant électrique,
- passer le cordon électrique dans une fente d'un élément de boîtier de la base motorisée, de sorte à insérer le cordon électrique dans un orifice de sortie de l'élément de boîtier, relié par la fente à un bord de l'élément de boîtier.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue isométrique arrière du dessous d'un appareil selon la présente invention ;
- la figure 2 représente une vue en coupe de l'appareil de la figure 1 ;
- la figure 3 représente une section partielle de l'appareil de la figure 1.

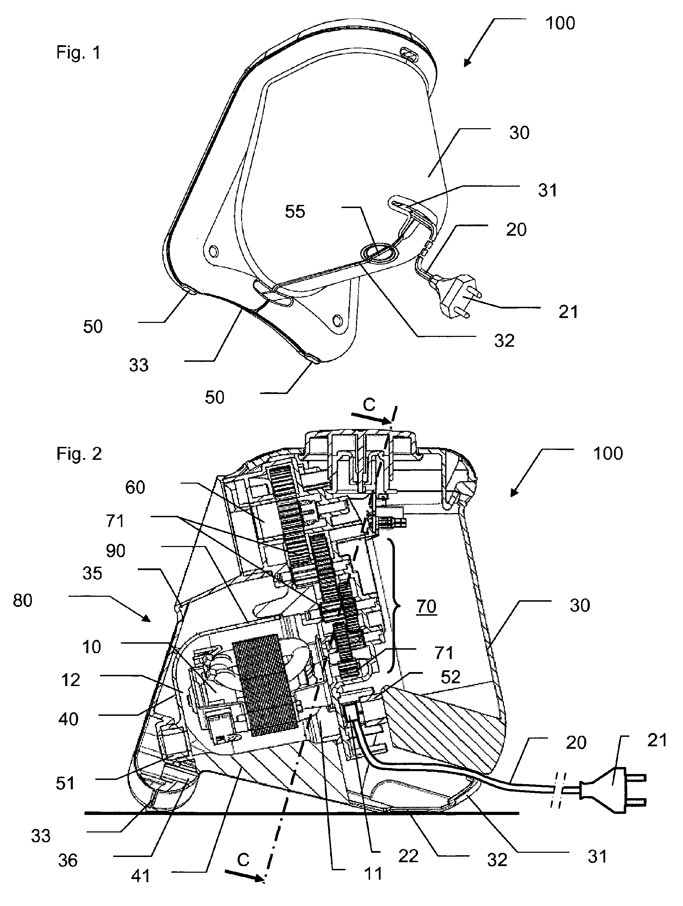

La figure 1 représente une vue isométrique arrière du dessous de la base motorisée 100 d'un appareil selon la présente invention. La base motorisée 100 comprend une façade 80 non visible sur cette vue, et un élément de boitier arrière 30 avec un orifice de sortie 31 pour le cordon électrique 20 se terminant par un connecteur 21. L'élément de boîtier 30 comprend également une fente 32 qui relie l'orifice de sortie 31 au bord 33 de l'élément de boîtier jointif avec la façade 80. Cette fente 32 est agencée pour permettre le passage, pendant le montage de l'appareil, du cordon électrique 20 depuis ce bord 33 vers l'orifice de sortie 31, alors que le cordon électrique 20 est déjà connecté au moteur électrique 10 de l'appareil. Selon la présente invention, il est possible d'agencer l'orifice de sortie 31 au milieu de l'élément de boîtier 30, sans pour autant faire passer le cordon électrique 20 dans l'orifice de sortie 31 préalablement au branchement du cordon électrique 20 sur l'appareil. Il suffit de faire passer le cordon électrique 20 dans la fente 32, au besoin en déformant élastiquement l'élément de boîtier 30 pour élargir la fente 32. Ainsi, l'élément de boîtier 30 n'est amené sur la ligne de montage que lorsqu'il faut le monter sur l'appareil.

L'orifice de sortie 31 est en forme de Té ou de Y, afin de permettre à l'utilisateur de ranger aisément le cordon électrique 20 après utilisation dans l'élément de boîtier 30 en le faisant coulisser dans l'orifice de sortie 31.

Enfin, la base motorisée 100 présente deux pieds 50 agencés sous la façade 80 et un pied arrière 55, qui définissent un plan inférieur d'appui sur un plan de travail. Les pieds 50 et 55 définissent un posage de type trépied isostatique et stable pour l'appareil.

La figure 2 représente une coupe sagittale de la base motorisée 100 reposant sur un plan de travail. La base motorisée 100 présente une façade 80 avec un axe d'entraînement 60 agencé sensiblement incliné par rapport à l'horizontale et destiné à entraîner divers outils de coupe rotatifs, non représentés. La base motorisée 100 comprend un moteur électrique 10 relié à l'axe d'entraînement 60 par une cascade de pignons 71 formant un réducteur 70 afin de faire tourner les outils de coupe à une vitesse de rotation adéquate pour découper des aliments. On peut envisager d'autres types de liaison entre le moteur électrique 10 et l'axe d'entraînement 60, tels qu'un réducteur épicycloïdal ou des courroies. La structure porteuse de la base motorisée 100 est un boîtier, formé notamment par l'élément de boîtier 30 à l'arrière et l'élément de boîtier 35 à l'avant. Lors de son fonctionnement, le moteur électrique 10 crée un flux d'air de refroidissement qui est canalisé par la gaine de ventilation 40 qui assure la fonction de moyens de guidage d'air et de moyens de canalisation d'air en entourant le moteur électrique 10. Le flux d'air de refroidissement entre vers la première extrémité 11 du moteur électrique 10 par des jeux entre la gaine de ventilation 40 et le réducteur 70 et/ou par une ouverture ménagée dans une paroi de support du réducteur 70. Le flux d'air de refroidissement va ensuite vers la deuxième extrémité 12 opposée du moteur électrique 10 et sort de la gaine de ventilation 40 par le patin élastique 51 intercalé entre la gaine de ventilation 40 et l'élément de boîtier avant 35, pour être redirigé vers la sortie d'air 36 par la façade 80.

Le moteur électrique 10 est monté sur le réducteur 70, de même que la gaine de ventilation 40. Comme expliqué ci-dessus, la gaine de ventilation 40 est positionnée sur l'élément de boîtier 35 avant par le patin élastique 51, et le réducteur 70 est quant à lui positionné sur l'élément de boîtier 30 par le patin élastique 52, de sorte que les vibrations créées par le moteur électrique 10 lors de son fonctionnement ne sont pas transmises aux éléments de boîtier 30 et 35.

Le cordon électrique 20, qui se termine à son extrémité libre par le connecteur 21, est connecté à son autre extrémité au moteur électrique 10 par l'intermédiaire du plot de connexion 22 et sort de l'élément de boîtier 30 par l'orifice de sortie 31. La fente 32 qui fait plus de cinq centimètres de longueur est bouchée sur une partie de sa longueur par une nervure 41 de la gaine de ventilation 40 afin de cacher l'intérieur de l'appareil.

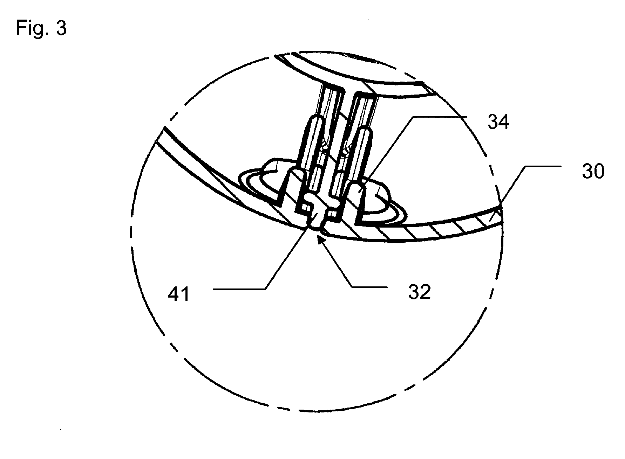

La figure 3 est une section partielle du bas de l'appareil montrant la fente 32 et la nervure 41, selon l'axe C-C représenté figure 2. La nervure 41 bouche la fente 32 pour cacher l'intérieur de l'appareil, et également comme le montre cette coupe partielle, pour offrir une surface extérieure sensiblement continue sans décrochement, afin d'améliorer la qualité perçue par l'utilisateur. Afin de correctement boucher la fente 32, la nervure 41 a elle-même une section en forme de croix pour former un écran efficace au regard de l'utilisateur. L'élément de boîtier 30 comprend également au niveau de la fente 32 des moyens de guidage 34 de la nervure 41, pour faciliter le montage en offrant une surface de référence qui guidera les pièces pendant l'approche de l'élément de boîtier 30 sur l'appareil en cours de montage.

Ainsi selon une caractéristique avantageuse de l'invention, la base motorisée 100 comprend au moins une pièce de structure 90 agencée pour boucher la fente 32 sur au moins une partie de sa longueur lorsque l'élément de boîtier 30 est monté sur la base motorisée 100. Dans l'exemple de réalisation illustré sur les figures, ladite pièce de structure 90 comprend la nervure 41 agencée dans la fente 32 de l'élément de boîtier 30. Plus particulièrement, la pièce de structure 90 appartient à la gaine de ventilation 40 agencée autour du moteur électrique 10.

L'invention concerne ainsi un appareil électroménager de préparation culinaire avec une base motorisée 100 comprenant au moins un moteur électrique 10, le cordon électrique 20 assurant une connexion électrique entre le moteur électrique 10 et le connecteur 21 agencé pour relier le moteur électrique 10 à un réseau de distribution de courant électrique, l'élément de boîtier 30 formant en partie une enceinte extérieure de la base motorisée 100 et comprenant l'orifice de sortie 31 par lequel le cordon électrique 20 sort de la base motorisée 100. L'élément de boîtier 30 comprend en outre la fente 32 reliant l'orifice de sortie 31 au bord 33 de l'élément de boîtier 30 de sorte à permettre une insertion du cordon électrique 20 dans l'orifice de sortie 31 en passant le cordon électrique 20 dans la fente 32 de l'élément de boîtier 30 lors du montage de l'appareil.

Dans l'exemple de réalisation illustré sur les figures, la base motorisée 100 comprend au moins une pièce de structure 90 agencée pour boucher la fente 32 sur au moins une partie de sa longueur lorsque l'élément de boîtier 30 est monté sur la base motorisée 100. Plus particulièrement, ladite au moins une pièce de structure 90 comprend la nervure 41 agencée pour s'insérer dans la fente 32 de l'élément de boîtier 30. La fente 32 comporte sur au moins une partie de sa longueur des moyens de guidage 34 de la nervure 41. Ladite au moins une pièce de structure 90 est la gaine de ventilation 40 agencée autour du moteur électrique 10. L'enceinte extérieure de la base motorisée 100 comprend la façade 80 agencée à l'avant de la base motorisée 100. L'élément de boîtier 30 est agencé à l'arrière de la base motorisée 100. Ladite au moins une pièce de structure 90 est prise en sandwich entre la façade 80 et l'élément de boîtier 30. Ladite au moins une pièce de structure 90 comprend au moins un point de positionnement sur la façade 80. L'appareil comprend le patin élastique 51 agencé entre la façade 80 et ladite au moins une pièce de structure 90 audit point de positionnement. La fente 32 est agencée derrière la façade 80. La fente 32 est agencée sous l'appareil. L'orifice de sortie 31 est en forme de Y. L'orifice de sortie 31 est agencé derrière l'appareil. L'appareil comprend les pieds 50, 55 agencés pour définir un plan inférieur d'appui sur un plan de travail. La base motorisée 100 comprend l'axe d'entraînement 60 agencé pour entraîner au moins un outil de travail (non représenté). L'axe d'entraînement 60 est relié au moteur par un réducteur 70. L'axe d'entraînement 60 est agencé latéralement sur la base motorisée 100.

L'invention concerne aussi le procédé de montage de l'appareil électroménager de préparation culinaire avec la base motorisée 100, comprenant les étapes consistant à :
- monter au moins un moteur électrique 10 dans la base motorisée (100),
- connecter le moteur électrique 10 avec le cordon électrique 20 assurant une connexion électrique entre le moteur électrique 10 et le connecteur 21 agencé pour relier le moteur électrique 10 à un réseau de distribution de courant électrique,
- passer le cordon électrique 20 dans la fente 32 de l'élément de boîtier 30 de la base motorisée 100, de sorte à insérer le cordon électrique 20 dans un orifice de sortie 31 de l'élément de boîtier 30, relié par la fente 32 à un bord 33 de l'élément de boîtier 30.

On comprendra que diverses modifications et/ou améliorations évidentes pour l'homme du métier peuvent être apportées au mode de réalisation de l'invention décrit dans la présente description sans sortir du cadre de l'invention défini par les revendications annexées. En particulier, il est fait référence à une fente présentant une longueur de cinq centimètres, mais on peut envisager avec la présente invention d'avoir une fente d'une longueur supérieure à dix centimètres, afin d'agencer l'orifice de sortie du cordon électrique loin des bords de l'élément de boîtier sur lequel l'orifice de sortie est implanté.

## Revendications

1. Appareil électroménager de préparation culinaire avec une base motorisée (100) comprenant :
- au moins un moteur électrique (10),
- un cordon électrique (20) assurant une connexion électrique entre le moteur électrique (10) et un connecteur (21) agencé pour relier le moteur électrique (10) à un réseau de distribution de courant électrique,
- un élément de boîtier (30) formant en partie une enceinte extérieure de la base motorisée (100) et comprenant un orifice de sortie (31) par lequel le cordon électrique (20) sort de la base motorisée (100),
**caractérisé en ce que** l'élément de boîtier (30) comprend une fente (32) reliant l'orifice de sortie (31) à un bord (33) de l'élément de boîtier (30) de sorte à permettre une insertion du cordon électrique (20) dans l'orifice de sortie (31) en passant le cordon électrique (20) dans la fente (32) de l'élément de boîtier (30) lors du montage de l'appareil.

2. Appareil selon la revendication 1, **caractérisé en ce que** la base motorisée (100) comprend au moins une pièce de structure (90) agencée pour boucher la fente (32) sur au moins une partie de sa longueur lorsque l'élément de boîtier (30) est monté sur la base motorisée (100).

3. Appareil selon la revendication 2, **caractérisé en ce que** ladite au moins une pièce de structure (90) comprend une nervure (41) agencée pour s'insérer dans la fente (32) de l'élément de boîtier (30).

4. Appareil selon la revendication 3, **caractérisé en ce que** la fente (32) comporte sur au moins une partie de sa longueur des moyens de guidage (34) de la nervure (41).

5. Appareil selon l'une des revendications 2 à 4, **caractérisé en ce que** ladite au moins une pièce de structure (90) est une gaine de ventilation (40) agencée autour du moteur électrique (10).

6. Appareil selon l'une des revendications 2 à 5, **caractérisé en ce que** l'enceinte extérieure de la base motorisée (100) comprend une façade (80) agencée à l'avant de la base motorisée (100), **en ce que** l'élément de boîtier (30) est agencé à l'arrière de la base motorisée (100), et **en ce que** ladite au moins une pièce de structure (90) est prise en sandwich entre la façade (80) et l'élément de boîtier (30).

7. Appareil selon la revendication 6, **caractérisé en ce que** ladite au moins une pièce de structure (90) comprend au moins un point de positionnement sur la façade (80).

8. Appareil selon la revendication 7, **caractérisé en ce qu'il** comprend un patin élastique (51) agencé entre la façade (80) et ladite au moins une pièce de structure (90) audit point de positionnement.

9. Appareil selon l'une des revendications 6 à 8, **caractérisé en ce que** la fente (32) est agencée derrière la façade (80).

10. Appareil selon l'une des revendications 1 à 9, **caractérisé en ce que** la fente (32) est agencée sous l'appareil.

11. Appareil selon l'une des revendications 1 à 10, **caractérisé en ce que** l'orifice de sortie (31) est en forme de Y.

12. Appareil selon l'une des revendications 1 à 11, **caractérisé en ce que** l'orifice de sortie (31) est agencé derrière l'appareil.

13. Appareil selon l'une des revendications 1 à 12, **caractérisé en ce qu'il** comprend des pieds (50, 55) agencés pour définir un plan inférieur d'appui sur un plan de travail.

14. Appareil selon l'une des revendications 1 à 13, **caractérisé en ce que** la base motorisée (100) comprend un axe d'entraînement (60) agencé pour entraîner au moins un outil de travail, et **en ce que** l'axe d'entraînement (60) est relié au moteur par un réducteur (70).

15. Appareil selon la revendication 14, **caractérisé en ce que** l'axe d'entraînement (60) est agencé latéralement sur la base motorisée (100).

16. Procédé de montage d'un appareil électroménager de préparation culinaire avec une base motorisée (100), comprenant les étapes consistant à :
- monter au moins un moteur électrique (10) dans la base motorisée (100),
- connecter le moteur électrique (10) avec un cordon électrique (20) assurant une connexion électrique entre le moteur électrique (10) et un connecteur (21) agencé pour relier le moteur électrique (10) à un réseau de distribution de courant électrique,
- passer le cordon électrique (20) dans une fente (32) d'un élément de boîtier (30) de la base motorisée (100), de sorte à insérer le cordon électrique (20) dans un orifice de sortie (31) de l'élément de boîtier (30), relié par la fente (32) à un bord (33) de l'élément de boîtier (30).

## Patentansprüche

1. Elektrohaushaltsgerät zur Zubereitung von Nahrungsmitteln mit einer motorisierten Basis (100), die Folgendes umfasst:
- mindestens einen Elektromotor (10),
- ein Netzkabel (20), das die elektrische Verbindung zwischen dem Elektromotor (10) und einem Stecker (21) sicherstellt, der so angeordnet ist, dass er den Elektromotor (10) an ein Stromverteilernetz anschließt,
- ein Gehäuseteil (30), das zum Teil eine äußere Hülle der motorisierten Basis (100) bildet und eine Austrittsöffnung (31) umfasst, durch die das Netzkabel (20) die motorisierte Basis (100) verlässt, **dadurch gekennzeichnet, dass** das Gehäuseteil (30) einen Spalt (32) umfasst, der die Austrittsöffnung (31) mit einem Rand (33) des Gehäuseteils (30) derart verbindet, dass das Netzkabel (20) in die Austrittsöffnung (31) eingeführt werden kann, indem das Netzkabel (20) beim Zusammenbau des Gerätes in den Schlitz (32) des Gehäuseteils (30) gesteckt wird.

2. Gerät nach Anspruch 1, **dadurch gekennzeichnet, dass** die motorisierte Basis (100) mindestens ein Strukturelement (90) umfasst, das so angeordnet ist, dass es den Spalt (32) auf zumindest einem Teil seiner Länge verschließt, wenn das Gehäuseteil (30) auf die motorisierte Basis (100) montiert wird.

3. Gerät nach Anspruch 2, **dadurch gekennzeichnet, dass** das genannte zumindest eine Strukturteil (90) einen Steg (41) umfasst, der so angeordnet ist, dass er in den Spalt (32) des Gehäuseteils (30) gleitet.

4. Gerät nach Anspruch 3, **dadurch gekennzeichnet, dass** der Spalt (32) auf zumindest einem Teil seiner Länge Mittel (34) zur Führung des Stegs (41) aufweist.

5. Gerät nach einem der Ansprüche 2 bis 4, **dadurch gekennzeichnet, dass** das zumindest eine Strukturelement (90) ein Lüftungskanal (40) ist, der um den Elektromotor (10) herum angeordnet ist.

6. Gerät nach einem der Ansprüche 2 bis 5, **dadurch gekennzeichnet, dass** die äußere Hülle des motorisierten Basis (100) eine Frontplatte (80) umfasst, die auf der Vorderseite der motorisierten Basis (100) angeordnet ist, dass das Gehäuseteil (30) auf der Rückseite der motorisierten Basis (100) angeordnet ist und dass das genannte zumindest eine Strukturelement (90) sandwichartig zwischen der Frontplatte (80) und dem Gehäuseteil (30) eingeschlossen ist.

7. Gerät nach Anspruch 6, **dadurch gekennzeichnet, dass** das genannte zumindest eine Strukturelement (90) zumindest einen Positionierpunkt an der Frontplatte (80) aufweist.

8. Gerät nach Anspruch 7, **dadurch gekennzeichnet, dass** es eine elastische Kufe (51) umfasst, die zwischen der Frontplatte (80) und dem genannten zumindest einen Strukturelement (90) an dem genannten Positionierpunkt angeordnet ist.

9. Gerät nach einem der Ansprüche 6 bis 8, **dadurch gekennzeichnet, dass** der Spalt (32) hinter der Frontplatte (80) angeordnet ist.

10. Gerät nach einem der Ansprüche 1 bis 9, **dadurch gekennzeichnet, dass** der Spalt (32) unter dem Gerät angeordnet ist.

11. Gerät nach einem der Ansprüche 1 bis 10, **dadurch gekennzeichnet, dass** die Austrittsöffnung (31) die Form eines Y hat.

12. Gerät nach einem der Ansprüche 1 bis 11, **dadurch gekennzeichnet, dass** die Austrittsöffnung (31) hinter dem Gerät angeordnet ist.

13. Gerät nach einem der Ansprüche 1 bis 12, **dadurch gekennzeichnet, dass** es Füße (50, 55) umfasst, die so angeordnet sind, dass sie eine untere Standfläche auf einer Arbeitsfläche definieren.

14. Gerät nach einem der Ansprüche 1 bis 13, **dadurch gekennzeichnet, dass** die motorisierte Basis (100) eine Antriebsachse (60) umfasst, die so angeordnet ist, dass sie zumindest ein Arbeitswerkzeug antreibt, und dass die Antriebsachse (60) über ein Getriebe (70) mit dem Motor verbunden ist.

15. Gerät nach Ansprüche 14, **dadurch gekennzeichnet, dass** die Antriebsachse (60) seitlich auf der motorisierten Basis (100) angeordnet ist.

16. Verfahren zum Zusammenbauen eines Elektrohaushaltsgerätes zur Zubereitung von Nahrungsmitteln mit einer motorisierten Basis (100), das die folgenden Schritte umfasst:
- Einbauen zumindest eines Elektromotors (10) in die motorisierte Basis (100),
- Anschließen des Elektromotors (10) mit einem Netzkabel (20), das die elektrische Verbindung zwischen dem Elektromotor (10) und einem Stecker (21) sicherstellt, der so angeordnet ist, dass er den Elektromotor (10) an ein Stromverteilernetz anschließt,
- Hineinstecken des Netzkabels (20) in einen Spalt (32) eines Gehäuseteils (30) der motorisierten Basis (100), indem das Netzkabel (20) in eine Austrittsöffnung (31) des Gehäuseteils (30) eingeführt wird, die durch den Spalt (32) mit einem Rand (33) des Gehäuseteils (30) verbunden ist.

## Claims

1. Food preparation household electrical appliance with a motorised base (100) comprising:
- at least one electric motor (10),
- an electric cord (20) providing an electrical connection between the electric motor (10) and a connector (21) arranged to connect the electric motor (10) to a power distribution network,
- a housing element (30) partly forming an outer enclosure of the motorised base (100) and comprising an outlet orifice (31) through which the electric cord (20) leaves the motorised base (100), **characterised in that** the housing element (30) comprises a slot (32) connecting the outlet orifice (31) to one edge (33) of the housing element (30) so that the electric cord (20) can be inserted in the outlet orifice (31) by feeding the electric cord (20) in the slot (32) of the housing element (30) when assembling the appliance.

2. Appliance according to claim 1, **characterised in that** the motorised base (100) comprises at least one structural part (90) arranged to plug the slot (32) over at least part of its length when the housing element (30) is mounted on the motorised base (100).

3. Appliance according to claim 2, **characterised in that** said at least one structural part (90) comprises a rib (41) arranged to fit in the slot (32) of the housing element (30).

4. Appliance according to claim 3, **characterised in that** the slot (32) comprises over at least part of its length means (34) for guiding the rib (41).

5. Appliance according to one of claims 2 to 4, **characterised in that** said at least one structural part (90) is a ventilation duct (40) arranged around the electric motor (10).

6. Appliance according to one of claims 2 to 5, **characterised in that** the outer enclosure of the motorised base (100) comprises a front panel (80) arranged in front of the motorised base (100), **in that** the housing element (30) is arranged behind the motorised base (100), and **in that** said at least one structural part (90) is sandwiched between the front panel (80) and the housing element (30).

7. Appliance according to claim 6, **characterised in that** said at least one structural part (90) comprises at least one positioning point on the front panel (80).

8. Appliance according to claim 7, **characterised in that** it comprises a resilient pad (51) arranged between the front panel (80) and said at least one structural part (90) at said positioning point.

9. Appliance according to one of claims 6 to 8, **characterised in that** the slot (32) is arranged behind the front panel (80).

10. Appliance according to one of claims 1 to 9, **characterised in that** the slot (32) is arranged underneath the appliance.

11. Appliance according to one of claims 1 to 10, **characterised in that** the outlet orifice (31) is Y-shaped.

12. Appliance according to one of claims 1 to 11, **characterised in that** the outlet orifice (31) is arranged behind the appliance.

13. Appliance according to one of claims 1 to 12, **characterised in that** it comprises feet (50, 55) arranged to define a lower support plane on a work surface.

14. Appliance according to one of claims 1 to 13, **characterised in that** the motorised base (100) comprises a drive shaft (60) arranged to drive at least one working tool, and **in that** the drive shaft (60) is connected to the motor by a gearbox (70).

15. Appliance according to claim 14, **characterised in that** the drive shaft (60) is arranged laterally on the motorised base (100).

16. Method for assembling a food preparation household electrical appliance with a motorised base (100), comprising the steps of:
- assembling at least one electric motor (10) in the motorised base (100);
- connecting the electric motor (10) with an electric cord (20) providing an electrical connection between the electric motor (10) and a connector (21) arranged to connect the electric motor (10) to a power distribution network,
- feeding the electric cord (20) in a slot (32) of a housing element (30) of the motorised base (100), so as to insert the electric cord (20) in an outlet orifice (31) of the housing element (30), connected by the slot (32) to one edge (33) of the housing element (30).
